# EUROPEAN PATENT APPLICATION

(11) **EP 1 253 262 A1**
(43) Date of publication of application: **30.10.2002**
(21) Application number: 01110470.0
(22) Date of filing: 27.04.2001
(51) Int. Cl.: E04F 11/16

(54) **Stair safety cushion**

(71) Applicant: Yang, Chin-Tsuen, Banchiau City, Taipei Hsein (TW)
(72) Inventor: Yang, Chin-Tsuen, Banchiau City, Taipei Hsein (TW)
(74) Representative: Viering, Jentschura & Partner

(57) **Abstract**

A stair safety cushion, whereof the top plane has softness and the bottom plane has anti-shock ability, is make to bond the bottom plane having anti-shock ability to stairs by an industrial twin adhesive with strong stickiness and is paved beyond the stair edge to combined with stairs securely and not easy to separate such that harm resulted from that children, the aged, and persons who act inconveniently fall over stairs is reduced.

## Description

### BACKGROUND OF THE INVENTION

### 1. Field of the invention

The present invention relates to a stair safety cushion, especially the one that is bonded to a stairstep to reduce harm resulted from falling over stairs.

### 2. DESCRIPTION OF THE PRIOR ART

Stairs are products of modern culture because stairs are indispensable construction in both great mansions and lower buildings of two or several stories. Because stairs are main passages for reaching every floor, they undoubtedly provide great convenience. Stairs are practical and, however, are also places that are most possible to result in harm for people, especially for children, old persons and persons who act inconveniently. For the sake of that stairs are mainly constructed by reinforced concrete and steel bars, the order of severity is obvious as soon as persons fall over the stairs incautiously. Besides, every stairstep of stairs has stair edge, and if heads or fragile parts of bodies of people hit the stair edge, a regretting result that can't be redeemed may happen. Therefore, it is urgent to set related protective device on stairs in advance.

In opinion of this, the habitually used objects have some disadvantages, and are not excellent design and need improvements.

The inventor of the present invention ruminated over the disadvantages resulted from the habitually used stairs, and earnestly deliberated the way of improvement and innovation. After studying hard for a long period, the inventor eventually succeeded in inventing the stair safety cushion.

### SUMMARY OF THE INVENTION

The first purpose of the present invention is to provide a stair safety cushion for ensuring personal safety and reducing the degree of harm resulted from falling over stairs.

The second purpose of the present invention is to provide a stair safety cushion, which has simple structure and is easy to be set up. Besides, the cost is low.

Another purpose of the present invention is to provide a stair safety cushion with high practicability.

A stair safety cushion achieving purposes described above is mainly to make the top of the cushion have softness and the bottom of the cushion have anti-shock ability to absorb colliding force, and the bottom plane is draped with an industrial twin adhesive with strong stickiness to bond and fix the cushion on every stairstep of stairs, and the cushion is paved to go beyond the stair edge and isn't easy to part from the stairstep. When people fall over stairs incautiously, softness of the top and anti-shock ability will absorb colliding force resulted from falling and substantially reduce harm of people who falling over stairs, and the regretting accident which can't be redeemed resulted form that fragile parts of the bodies hit the stair edge of stairs can be avoided.

### BRIEF DESCRIPTION OF THE DRAWINGS

The drawings disclose an illustrative embodiment of the present invention which serves to exemplify the various advantages and objects hereof, and are as follows:
FIG.1 A, B 3D Schematic diagram of the top plane and the bottom plane of the present invention, a stair safety cushion
FIG.2 A, B Schematic diagram of the bottom anti-shock structure of the present invention, a stair safety cushion
FIG.3 Schematic diagram of the present invention, a stair safety cushion, combined with stairs
FIG.4 Schematic diagram of the motion of the present invention
FIG.5 A, B, C Schematic diagrams of other styles of the bottom buffer structure of the present invention, a stair safety cushion

| [Diagram remarks] | |
|---|---|
| 1 | Cushion |
| 11 | The top plane |
| 12 | The bottom plane |
| 13 | Buffer protruding column |
| 14 | Circular fillister |
| 15 | Trimming line |
| 2 | Twin adhesive |
| 3 | Stairs |
| 31 | Stairstep |
| 32 | Stair edge |
| 4 | Person |
| 51 | < -shape fillister |
| 52 | Square fillister |
| 53 | Wavy fillister |

### DETAILED DESCRIPTION OF THE PREFERRED EMBODIMENT

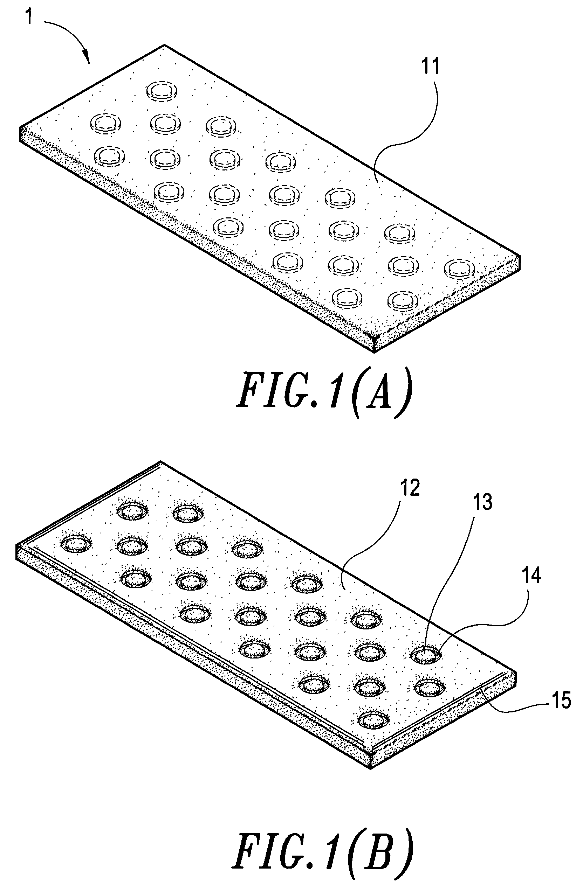

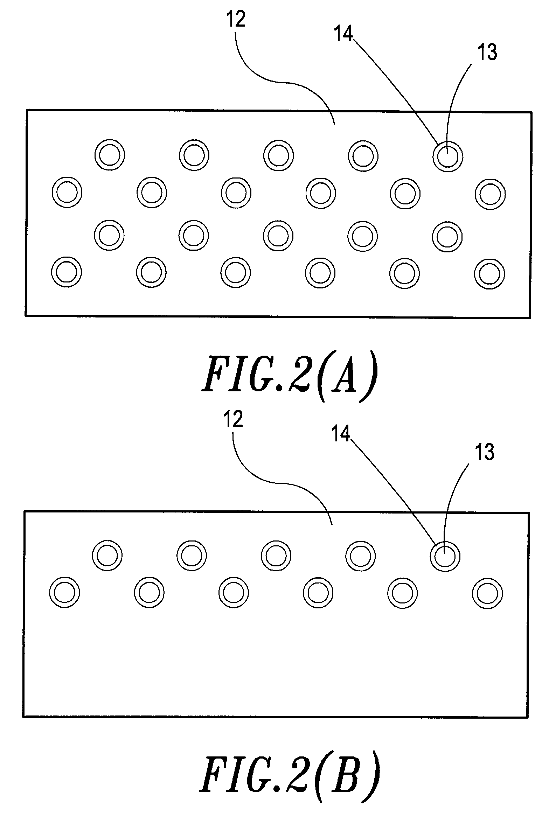

Referring to FIG. 1 A, B, wherein the stair safety cushion is provided from the present invention, the top plane 11 of the cushion 1 is a plane and has softness, and several trimming lines 15 are set around the bottom plane 12 and carved to half thickness of the cushion such that the additional part of the cushion can be taken off along these trimming lines 15 according to the real size of every stairstep of the stairs to keep the whole beauty of stairs. Besides, several circular fillisters 14 are set on the bottom plane 12 to make a buffer column 13 is formed inside every circular fillister 14 to serve as the buffer of the colliding force. According to requirements, circular fillisters 14 of the bottom plane 12 can be distributed on the whole bottom plane 12 of the cushion 1 (as shown in FIG.2A) or along the front edge of the bottom plane 12 of the cushion 1 (as shown in FIG.2B) such that the bottom plane 12 of the cushion 1 has the feature of anti-shock because of the circular fillisters 14.

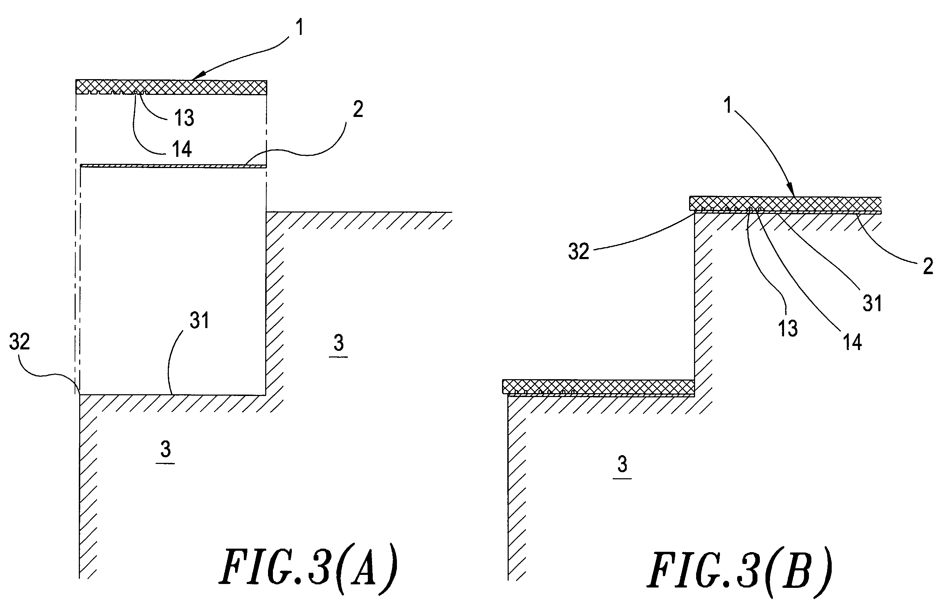

Besides, the industrial twin adhesive with strong stickiness 2 is bonded to the bottom plane 12 of the cushion, as shown in FIG.3 A, B, to make the bottom plane 12 of the cushion bonded and fixed on every stairstep of stairs by using the characteristic that both sides of the twin adhesive have stickiness. Besides, the cushion is paved to go beyond the stair edge 32 to cover the stair edge 32 to avoid the accident that fragile parts of bodies of people hit the stair edge and have serious harm. In addition, the cushion 1 is made of the material that can be trim to match the real size of the stairstep 31 such that when the cushion 1 is bonded to the stairstep 31, not only the feature of safety can be achieved, but also whole beauty of the stairs 3 can be kept.

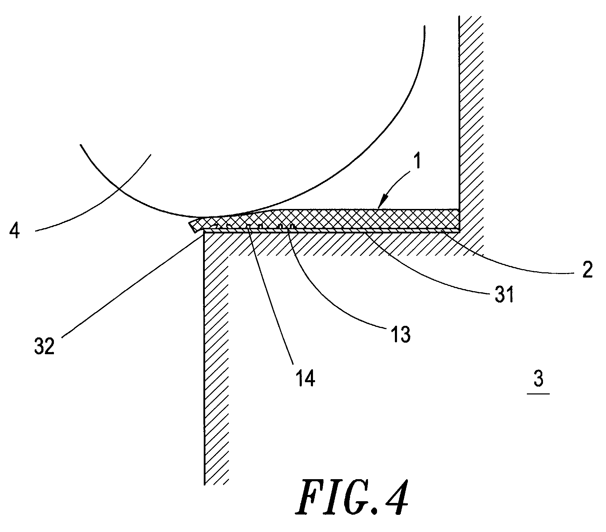

Referring to FIG.4, the schematic diagram of bringing the present invention, stair safety cushion, into practice, when a person 4 falls over the stair 3 incautiously, the colliding force can be absorbed by the softness of the top plane 11 and the anti-shock ability of the bottom plane 12 of the cushion bonded to the stairstep such that the colliding force can be buffered, and the body of the person 4 can be avoided to hit stairs 3 directly and reduce degree of harm resulted from falling. Besides, the stair edge 32 of stairs is covered to avoid hitting of the body and the stair edge 32. Therefore, setting the present invention can effectively reduce harm resulted from that children, the aged or persons who act inconveniently fall over stairs incautiously.

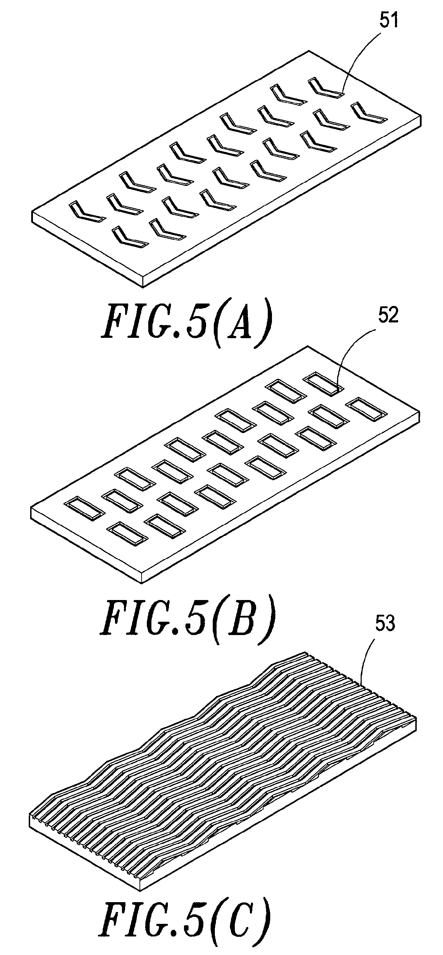

Besides, referring to FIG.5 A, B, C, the schematic diagram of the buffer structure of the bottom plane of the cushion in the present invention and other styles of the buffer structure, the fillister of the bottom plane of the cushion is not only limited to a certain style but also can be set as the < -shape fillister 51 (FIG.5A), the square fillister 52 (FIG. 5B), the wavy fillister 53 (FIG.5C) or any geometry graph with any shape, and a buffer protruding column is formed with matching the shape of the fillister to serve as the buffer of colliding force.

In addition, the bottom plane 12 of the cushion 1 can also be made of the material having anti-shock ability and softness without setting any buffer structure to make the buffer structure of the bottom plane of the cushion can be retained or deleted according to the characteristic of the material, or combined with more than two materials while the function of the softness and anti-shock can be achieved.

With comparing with other habitually used technologies, the stair safety cushion provided from the present invention has advantages as listed:
1. The present invention is to make the cushion whereof the top has softness and the bottom has anti-shock ability bonded to every stairstep of stairs to reduce harm resulted from that persons fall over stairs.
2. The cushion of the present invention can be trimmed according to the real size of the stairstep and make it can be bonded to stairs securely, and paved to go beyond the stair edge to avoid the regretting harm which can not be redeemed resulted from that fragile parts of the body of the person hit the stair edge.

Many changes and modifications in the above described embodiment of the invention can, of course, be carried out without departing from the scope thereof. Accordingly, to promote the progress in science and the useful arts, the invention is disclosed and is intended to be limited only by the scope of the appended claims.

## Claims

1. a stair safety cushion, whereof a top plane has softness, a bottom plane has anti-shock ability, a plurality of trimming lines are set around an edge of said cushion, and a twin adhesive is bonded to said bottom plane of said cushion such that redundant part of said cushion can be trimmed off to match real size of a stairstep, and then said cushion is boded to said stairstep by said twin adhesive securely and is paved beyond a stair edge of said stairstep.

2. a stair safety cushion as recited in claim 1, whereof a plurality
of fillisters can be set on said bottom plane of said cushion and a buffer protruding column is formed in every said fillister to serve as a buffer of colliding force.

3. a stair safety cushion as recited in claim 1, whereof said bottom plane of said cushion can be made of a material having anti-shock ability and softness directly, and said buffer structure of said bottom plane of said cushion can be retained or deleted according to the characteristic of said material and also can be made by combining two or more materials while functions of softness and anti-shock ability are achieved.
